# EUROPEAN PATENT APPLICATION

(11) **EP 4 354 605 A1**
(43) Date of publication of application: **17.04.2024**
(21) Application number: 23201353.2
(22) Date of filing: 03.10.2023
(51) Int. Cl.: H01M 50/107, H01M 50/152, H01M 50/183, H01M 50/342

(54) **CYLINDRICAL SECONDARY BATTERY**

(30) Priority: 11.10.2022 KR 20220129382
(71) Applicant: Samsung SDI Co., Ltd., Yongin-si, Gyeonggi-do 17084 (KR)
(72) Inventor: KO, Sung Gwi, 17084 Yongin-si (KR); AHN, Jeong Chull, 17084 Yongin-si (KR); PARK, Gun Gue, 17084 Yongin-si (KR)
(74) Representative: Marks & Clerk LLP

(57) **Abstract**

A cylindrical secondary battery includes: an electrode assembly including a first electrode plate, a separator, and a second electrode plate; a case accommodating the electrode assembly and electrically connected to the second electrode plate; a terminal passing through a lower surface of the case and electrically connected to the first electrode plate; and a cap plate sealing an upper end portion of the case and having a vent. The vent is a thinner portion of the cap plate than other regions thereof and has a central notch having a ring shape and being at a central portion of the cap plate and an inner peripheral notch having a line shape extending from the central notch toward an edge of the cap plate.

## Description

### BACKGROUND

### 1. Field

Aspects of embodiments of the present disclosure relate to a cylindrical secondary battery.

### 2. Description of the Related Art

Secondary batteries are power storage systems that are capable of providing high energy density by converting electrical energy into chemical energy and storing the chemical energy. Compared with non-rechargeable (or primary) batteries, secondary batteries are designed to be rechargeable and, thus, are widely used in IT devices, such as smartphones, cellular phones, laptop computers, and tablet personal computers (PCs). Recently, interest in electric vehicles has increased as a means to reduce environmental pollution, and thus, high-capacity secondary batteries have been adopted for use in electric vehicles. Such secondary batteries desirably have certain characteristics, such as high density, high output power, and stability.

The above information disclosed in this Background section is for enhancement of understanding of the background of the present disclosure, and therefore, it may contain information that does not constitute related (or prior) art.

### SUMMARY

Embodiments of the present disclosure provide a cylindrical secondary battery in which a cap plate has a vent having a central notch having a ring shape and a plurality of inner peripheral notches having a line shape extending outwardly from the central notch. Therefore, gas may be easily discharged through the cap plate when the vent fractures while preventing internal components from leaking out.

A cylindrical secondary battery, according to an embodiment of the present disclosure, includes: an electrode assembly including a first electrode plate, a separator, and a second electrode plate; a case accommodating the electrode assembly and electrically connected to the second electrode plate; a terminal passing through a lower surface of the case and electrically connected to the first electrode plate; and a cap plate sealing an upper end portion of the case and having a vent. The vent is a thinner portion of the cap plate than other regions thereof and has a central notch having a ring shape and being at a central portion of the cap plate and an inner peripheral notch having a line shape extending from the central notch toward an edge of the cap plate.

A first thickness is a thickness of the central notch, and a second thickness is a thickness of the inner peripheral notch. The first thickness may be less than or equal to the second thickness.

The thickness of the central notch and the thickness of the inner peripheral notch may be in a range of 0.1 mm to 0.35 mm.

The cylindrical secondary battery may further include: a first current collector plate having a circular plate shape corresponding to a lower surface of the electrode assembly and contacting and electrically connected to the first electrode plate exposed at the lower surface of the electrode assembly; and a second current collector plate having a circular plate shape corresponding to an upper surface of the electrode assembly and contacting and electrically connected to the second electrode plate exposed at the upper surface of the electrode assembly.

The cap plate may be a circular metal plate and may have a central region over the second current collector plate and an edge region coupled to the case and protruding upwardly above the central region thereof. The vent may be in the central region.

The case may have: a beading part recessed into the case below the cap plate; and a crimping part formed by the upper end portion of the case being bent inwardly to fix the edge region of the cap plate.

The inner peripheral notch may include two to twelve inner peripheral notches that are spaced apart from each other at equal intervals around the central notch.

The inner peripheral notches may be symmetrical to each other in a plan view with respect to the central notch.

The cylindrical secondary battery may further include: a first gasket between the terminal and the case; and a second gasket between the cap plate and the case. The cap plate may be electrically insulated from the first electrode plate and the second electrode plate.

The central notch may have an inner diameter of 2 mm to 9 mm.

A width of an upper surface of the central notch and a width of an upper surface of the inner peripheral notch may be greater than a width of a lower surface thereof (e.g. a width of an upper surface of the central notch may be greater than a width of a lower surface of the central notch, and/or a width of an upper surface of the inner peripheral notch may be greater than a width of a lower surface of the inner peripheral notch).

The central notch and the inner peripheral notch may have a two-stage or three-stage stepped portion shape (e.g. formed by performing forging twice or three times).

At least some of the above and other features of the invention are set out in the claims.

### BRIEF DESCRIPTION OF DRAWINGS

FIG. 1 is a perspective view of a cylindrical secondary battery according to an embodiment of the present disclosure.
FIG. 2 is a cross-sectional view of the cylindrical secondary battery shown in FIG. 1.
FIG. 3 is a plan view of a cap plate in the cylindrical secondary battery shown in FIG. 1 according to an embodiment of the present disclosure.
FIGS. 4A and 4B are cross-sectional views of the cap plate shown in FIG. 3 taken along line 4a-4a and line 4b-4b, respectively.
FIGS. 5A to 5C are plan views of cap plates in the cylindrical secondary battery shown in FIG. 1 according to other embodiments of the present disclosure.
FIGS. 6A and 6B are enlarged cross-sectional views of the portion 6 in FIG. 4B according to various embodiments of the present disclosure.
FIG. 7 shows experimental results of fracture pressure according to a thickness of a vent of the cylindrical secondary battery shown in FIGS. 1 and 2.
FIGS. 8A and 8B are cross-sectional views and plan views of the cap plate before and after, respectively, a central notch and an inner peripheral notch of the vent in the cylindrical secondary battery shown in FIGS. 1 and 2 fracture.
FIG. 9 is an image showing experimental results in which the vent is fractured due to an increase in internal pressure in a case of the cylindrical secondary battery shown in FIGS. 1 and 2.
FIG. 10 is a photograph showing a result in which a vent of a cap plate not including a central notch is fractured according to a comparative example.

### DETAILED DESCRIPTION

Hereinafter, embodiments of the present disclosure will be described, in detail, with reference to the accompanying drawings. Examples of the present disclosure are provided to more completely explain aspects and features of the present disclosure to those skilled in the art. The following examples may be modified in various other forms. Thus, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

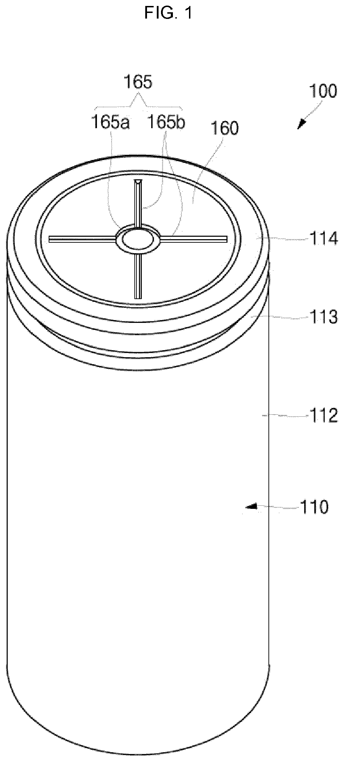

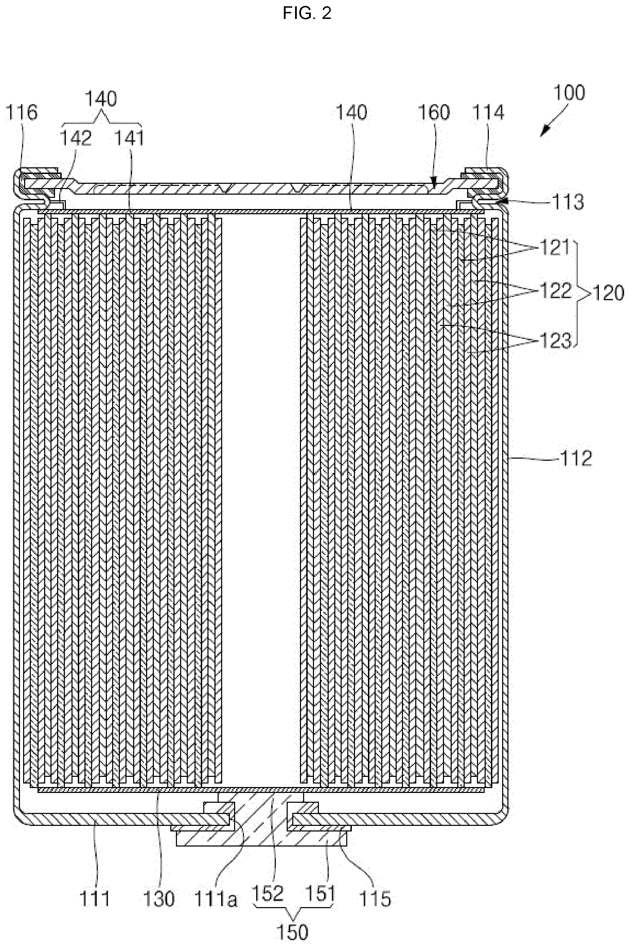

FIG. 1 is a perspective view of a cylindrical secondary battery 100 according to an embodiment of the present disclosure. FIG. 2 is a cross-sectional view of the cylindrical secondary battery 100 shown in FIG. 1 in a longitudinal direction.

As shown in FIGS. 1 and 2, the cylindrical secondary battery 100, according to an embodiment of the present disclosure, may include a case 110, an electrode assembly 120 accommodated in the case 110, a terminal 150 made of a rivet and coupled to a terminal hole (or terminal opening) formed in one end portion (e.g., in one end) of the case 110, and a cap plate 160 sealing an opening at the other end portion (e.g., the opposite end or the opposite end portion) of the case 110.

The case 110 has a lower surface portion 111 having a circular shape and a side surface portion 112 extending upwardly from an edge (e.g., a peripheral edge) of the lower surface portion 111 to have a length. The lower surface portion 111 and the side surface portion 112 of the case 110 may be integrally formed.

The lower surface portion 111, which has the circular shape, may have a flat circular plate shape and may have a terminal hole (e.g., a terminal opening) 111a formed to pass through a central portion thereof. The terminal 150, made of the rivet, may be inserted into and coupled to the lower surface portion 111 via the terminal hole 111a in the lower surface portion 111. A first gasket 115 may be interposed between the terminal hole 111a and the terminal 150 for sealing and electrical insulating therebetween. The first gasket 115 prevents contact between the terminal 150 and the case 110 to electrically separate (or electrically isolate) the terminal 150 from the case 110. The terminal hole 111a in the lower surface portion 111 of the case 110 may be sealed by the first gasket 115. The first gasket 115 may be made of a resin material, such as polyethylene (PE), polypropylene (PP), or polyethylene terephthalate (PET).

An upper end portion of the case 110 is open during a manufacturing process of the cylindrical secondary battery 100. Therefore, during the manufacturing process of the cylindrical secondary battery 100, the electrode assembly 120 may be inserted into the case 110 through the open upper end portion of the case 110 together with an electrolyte. After the electrolyte and the electrode assembly 120 are inserted into the case 110, the cap plate 160 may be coupled to the case 110 at the open upper end portion to seal the inside of the case 110. Here, the electrolyte enables movement of lithium ions between a positive electrode plate 121 and a negative electrode plate 122 of the electrode assembly 120. The electrolyte may be a non-aqueous organic electrolyte that is a mixture of a lithium salt and a high-purity organic solvent. In some embodiments, the electrolyte may be a polymer using (or including) a polyelectrolyte or a solid electrolyte, but the electrolyte is not limited thereto.

The case 110 may be made of steel, a steel alloy, aluminium, an aluminium alloy, or an equivalent thereof, but a material thereof is not limited thereto. In addition, a beading part (e.g., a bead) 113 recessed into the case 110 may be formed below the cap plate 160 so that the electrode assembly 120 does not deviate to the outside, and a crimping part (e.g., a crimp) 114 bent inwardly may be formed on the cap plate 160. Thus, the cap plate 160 may be retained between the beading part 113 and the crimping part 114 of the case 110.

The beading part 113 is formed after the electrode assembly 120 is inserted through the open upper end portion of the case 110 and prevents the electrode assembly 120 from being separated from the case 110.

The electrode assembly 120 includes a first electrode plate 121, a second electrode plate 122, and a separator 123. The first electrode plate 121 may be the positive electrode plate, and the second electrode plate 122 may be the negative electrode plate. Of course, the reverse is also possible. Hereinafter, for convenience of description, an embodiment in which the first electrode plate 121 is the positive electrode plate, and the second electrode plate 122 is the negative electrode plate will be described.

The first electrode plate 121 may be formed by coating at least one surface of a plate-shaped metal foil made of aluminium (Al) with a positive electrode active material, such as transition metal oxide. In addition, a positive electrode uncoated portion, which is a portion of the plate-shaped metal foil that is not coated with a positive electrode active material may be provided at a lower end portion of the first electrode plate 121. The positive electrode uncoated portion may protrude in a downward direction of the electrode assembly 120 (e.g. in a direction towards the lower surface portion 111). That is, the positive electrode uncoated portion of the first electrode plate 121 may protrude downwardly (e.g. in a direction towards the lower surface portion 111) further than the second electrode plate 122 and the separator 123.

The second electrode plate 122 may be formed by coating at least one surface of a plate-shaped metal foil made of copper (Cu) or nickel (Ni) with a negative electrode active material, such as graphite or carbon. In addition, a negative electrode uncoated portion, which is a portion of the plate-shaped metal foil that is not coated with a negative electrode active material, may be provided at an upper end portion of the second electrode plate 122. The negative electrode uncoated portion may protrude in an upward direction of the electrode assembly 120 (e.g. in a direction away from the lower surface portion 111). That is, the negative electrode uncoated portion of the second electrode plate 122 may protrude upwardly (e.g. in a direction away from the lower surface portion 111) further than the first electrode plate 121 and the separator 123.

The separator 123 may be made of PE or PP, but the present disclosure is not limited thereto. The separator prevents an electrical short circuit between the first electrode plate 121 and the second electrode plate 122 while enabling the movement of lithium ions therebetween.

After the first electrode plate 121, the second electrode plate 122, and the separator 123 are stacked, the electrode assembly 120 is wound from a winding end in an approximately cylindrical shape. In the electrode assembly 120, the positive electrode uncoated portion may protrude downwardly (e.g. in a direction towards the lower surface portion 111) from the first electrode plate 121, and the negative electrode uncoated portion may protrude upwardly (e.g. in a direction away from the lower surface portion 111) from the second electrode plate 122.

A first current collector plate 130 may be a circular metal plate having a shape corresponding to a lower surface of the electrode assembly 120. A planar size of the first current collector plate 130 may be less than or equal to a size of the lower surface of the electrode assembly 120. The first current collector plate 130 may be made of aluminium (Al). When an upper surface of the first current collector plate 130 is in contact with the lower surface of the electrode assembly 120, the first current collector plate 130 may be fixed and electrically connected to the first electrode plate 121 exposed at a lower portion of the electrode assembly 120 by welding. When a lower surface of the first current collector plate 130 is in contact with an upper surface of the terminal 150, the first current collector plate 130 may be fixed and electrically connected to the terminal 150 by welding. The first current collector plate 130 acts as a passage for current flow between the first electrode plate 121 of the electrode assembly 120 and the terminal 150.

A second current collector plate 140 may include a planar portion 141 having a circular shape and corresponding to an upper surface of the electrode assembly 120 and an extension portion 142 extending upwardly (e.g. in a direction away from the lower surface portion 111) from an edge of the planar portion 141. A lower surface of the planar portion 141 may be in contact with the upper surface of the electrode assembly 120. When the lower surface of the planar portion 141 is in contact with the upper surface of the electrode assembly 120, the planar portion 141 may be fixed and electrically connected to the second electrode plate 122 exposed at an upper portion of the electrode assembly 120 by welding.

The extension portion 142 may extend upwardly (e.g. in a direction away from the lower surface portion 111) from the edge of the planar portion 141. The extension portion 142 may be in contact with and coupled to the beading part 113 of the case 110. As an example, the extension portion 142 may be coupled, by welding, while in contact with an inner surface of the beading part 113 of the case 110. In some embodiments, a plurality of extension portions 142 may be provided to be spaced apart from each other along the edge of the planar portion 141. The second current collector plate 140 acts as a passage for current flow between the second electrode plate 122 of the electrode assembly 120 and the case 110. Thus, the case 110 may be (or may act as) a negative terminal.

The terminal 150 may be inserted into the terminal hole 111a formed in the lower surface portion 111 of the case 110 and electrically connected to the first current collector plate 130. Thus, the terminal 150 may be (or may act as) a positive terminal. The terminal 150 and the case 110 may have different polarities. The terminal 150 may be made of the same material as the first current collector plate 130 and the first electrode plate 121 or may be made of a similar material. A diameter of a portion of the terminal 150 exposed below the case 110 and a diameter of a portion thereof positioned inside the case 110 may be greater than a diameter positioned thereof in the terminal hole 111a.

The terminal 150 may include a head 151 that is the portion exposed below the case 110 and a fastening portion 152 that is the portion positioned inside the case 110 to face the electrode assembly 120. The terminal 150 may be coupled to the terminal hole 111a in the case 110 from outside to inside. In such an embodiment, the head 151 may be positioned outside the case 110. In addition, the fastening portion 152 may be press-deformed (e.g., press-molded) through riveting and pressed in a state in which the first gasket 115 is placed on the lower surface portion 111. In one embodiment, the fastening portion 152 may have a diameter that gradually increases from the terminal hole 111a toward the inside of the case 110. In addition, the head 151 may be in close contact with a lower portion of the lower surface portion 111 with the first gasket 115 interposed therebetween. In such an embodiment, the first gasket 115 may be interposed between the terminal 150 and the terminal hole 111a to electrically insulate and seal the terminal 150 and the case 110 from each other. The terminal 150 may be electrically connected to the first electrode plate 121 of the electrode assembly through the first current collector plate 130.

The cap plate 160 may be a circular metal plate and may be coupled to the upper end portion of the case 110. An upper surface of the cap plate 160 may be exposed to the outside. The cap plate 160 may be coupled to the upper end portion of the case 110 with a second gasket 116 interposed therebetween and, thus, may be prevented from being electrically connected to the case 110. The cap plate 160 may not be electrically connected to a positive electrode or a negative electrode of the electrode assembly 120 and, thus, may have no separate electrical polarity.

The cap plate 160 may be fixed due to an edge region 162 thereof being positioned between the beading part 113 and the crimping part 114 of the case 110. More specifically, when the second gasket 116 is placed on the beading part 113 of the case 110, the cap plate 160 may be seated on the second gasket 116. Thereafter, the crimping part 114 of the case 110 is bent in an inward direction of the cap plate 160 to press the second gasket 116 and couple the cap plate 160 and the case 110. The second gasket 116 may be made of a resin material, such as PE, PP, or PET. The second gasket 116 may press the cap plate 160 against the case 110 to seal the cap plate 160 and may prevent the cap plate 160 from being separated from the case 110.

The cap plate 160 may have a central region 161 positioned over the second current collector plate 140 and the edge region 162 interposed between the beading part 113 and the crimping part 114 of the case 110 and coupled to the case 110. The central region 161 may protrude in an inward direction of the case 110 further than the edge region 162. For example, the edge region 162 of the cap plate 160 may be positioned at a higher level than the central region 161 (e.g., the central region 161 of the cap plate 160 may be depressed toward a center of the case 110 from the edge region 162). The cap plate 160 may also have a connection region 163 for connecting (or extending between) the central region 161 and the edge region 162. The connection region 163 may be inclined.

The cap plate 160 has a vent 165 in the central region 161 configured to be opened by set (or reference) pressure. The vent 165 may be a thinner portion of the cap plate 160 than other regions of the cap plate 160. For example, the vent 165 may be a notch formed downwardly (e.g. in a direction towards the lower surface portion 111) from the upper surface of the cap plate 160.

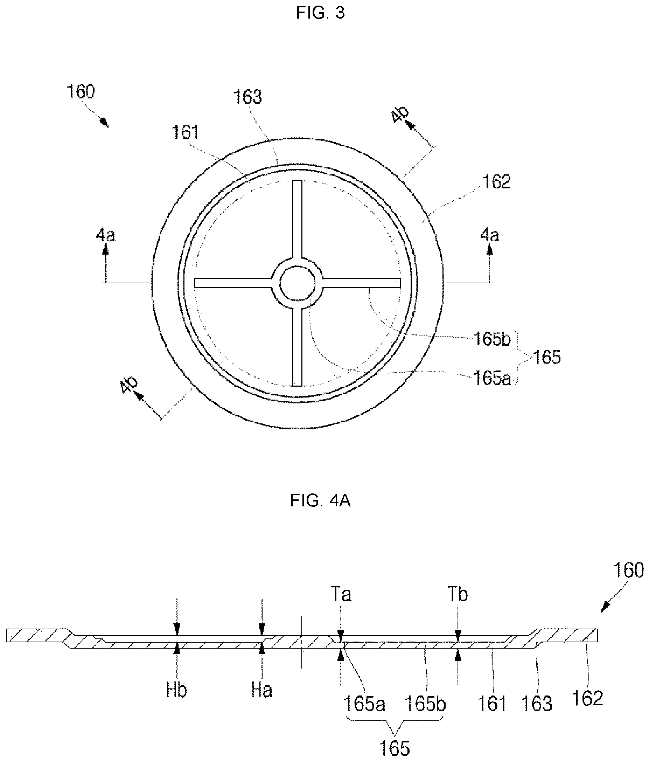

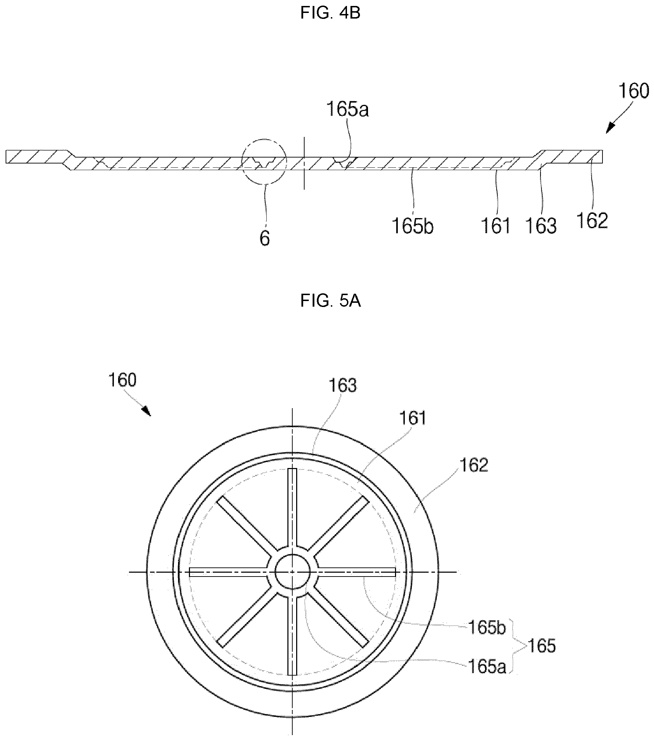

FIG. 3 is a plan view of the cap plate 160 according to an embodiment. FIG. 4A is a cross-sectional view of the cap plate taken along the line 4a-4a in FIG. 3, and FIG. 4B is a cross-sectional view of the cap plate taken along the line 4b-4b in FIG. 3. Hereinafter, configurations of the cap plate 160 and the vent 165 will be described in detail with reference to FIGS. 3, 4A, and 4B.

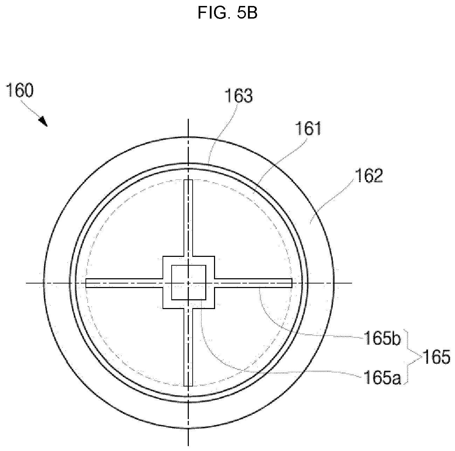

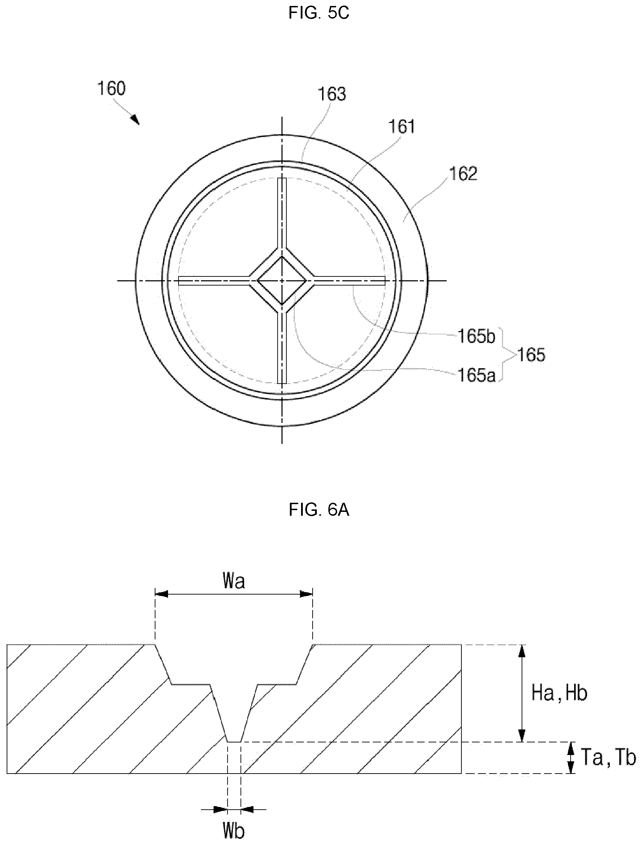

The vent 165 may have a central notch 165a having a ring shape formed at a central portion of the cap plate 160 and an inner peripheral notch 165b having a line (or linear) shape that extends outwardly from the central notch 165a. The central notch 165a may have a circular ring shape. As another example, the central notch 165a may have a quadrangular shape as shown in FIGS. 5B and 5C. The central notch 165a may have a polygonal shape other than a quadrangular shape, and a shape thereof may be variously changed. In addition, as shown in FIGS. 5B and 5C, when the central notch 165a has the quadrangular shape and four inner peripheral notches 165b extend therefrom, the inner peripheral notches 165b may extend outwardly from corners (e.g., vertices) of the central notch 165a, respectively, or may extend outwardly from a center of a side (e.g., of a linear side) thereof, but the present disclosure is not limited thereto.

In addition, although four inner peripheral notches 165b are shown in FIG. 3, eight inner peripheral notches 165b may be provided as shown in FIG. 5A. In various embodiments, a plurality of inner peripheral notches 165b may be provided. The plurality of inner peripheral notches 165b may be spaced apart from each other at equal intervals around the central notch 165a. For example, two to twelve inner peripheral notches 165b may be spaced apart from each other at equal intervals around the central notch 165a.

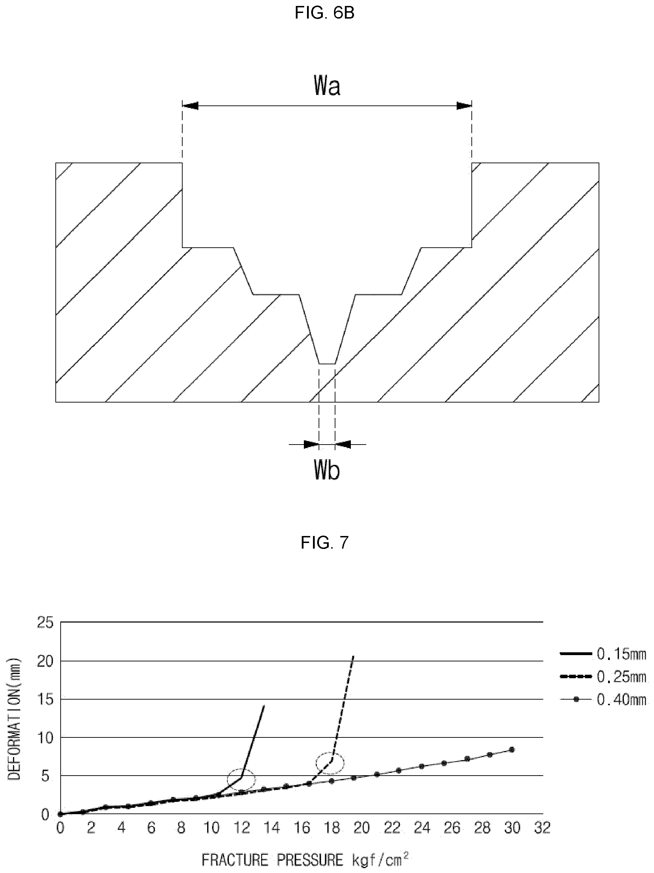

The central notch 165a and the inner peripheral notch 165b may be formed by performing pressing and forging operations two or three times in a notch press process. FIGS. 6A and 6B are enlarged views illustrating the portion C in FIG. 4B according to various embodiments. In more detail, FIGS. 6A and 6B are enlarged views illustrating a cross section of the central notch 165a according to various embodiments. A cross section of the inner peripheral notch 165b may have the same structure as the cross section of the central notch 165a.

Because the central notch 165a and the inner peripheral notch 165b are formed by performing pressing and forging two or three times, a two-stage stepped portion (e.g., a double step structure) as shown in FIG. 6A or a three-stage stepped portion (e.g., a triple step structure) as shown in FIG. 6B may be formed. A first width Wa of the central notch 165a and the inner peripheral notch 165b, that is, a width thereof at the upper surface of the cap plate 160, may be greater than a second width Wb, that is, a width thereof at a lower portion adjacent to (e.g., nearer to) a lower surface of the cap plate 160. As an example, in the central notch 165a and the inner peripheral notch 165b, the first width Wa may be about 1.5 mm or less, and the second width Wb may be about 0.1 mm or less. Of course, the first width Wa and the second width Wb may be greater than 0, and the second width Wb may be less than the first width Wa without limitation.

A first depth Ha of the central notch 165a, that is, a depth from the upper surface of the cap plate 160, may be greater than or equal to a second depth Hb of the inner peripheral notch 165b. The first depth Ha may be a height from the upper surface of the cap plate 160 to the lowest point of the central notch 165a. The second depth Hb may be a height that is a depth of the inner peripheral notch 165b from the upper surface of the cap plate 160 to the lowest point of the inner peripheral notch 165b.

In some embodiments, the central notch 165a and the inner peripheral notch 165b may have the same depth from the upper surface of the cap plate 160, and the central notch 165a and the inner peripheral notch 165b may have the same thickness (i.e., Ta=Tb). The first thickness Ta may be a thickness from the lowest point of the central notch 165a to the lower surface of the cap plate 160, and the second thickness Tb may be a thickness from the lowest point of the inner peripheral notch 165b to the lower surface of the cap plate 160. When internal pressure of the case 110 increases, pressure applied to the central notch 165a positioned at a central portion of the cap plate 160 may be greater than pressure applied to the inner peripheral notch 165b adjacent to the edge region 162, and thus, after the central notch 165a is fractured, the inner peripheral notch 165b may be fractured (e.g., the central notch 165a may fracture or burst before the inner peripheral notches 165b fracture or burst).

As another example, the first thickness Ta of the central notch 165a may be less than the second thickness Tb of the inner peripheral notch 165b. However, when the first thickness Ta is equal to the second thickness Tb, the same forging process may be used to form both the central notch 165a and the inner peripheral notch 165b together, thereby reducing manufacturing costs and complexity.

The first thickness Ta of the central notch 165a and the second thickness Tb of the inner peripheral notch 165b may be in a range of about 0.10 mm to about 0.35 mm. When the first thickness Ta of the central notch 165a and the second thickness Tb of the inner peripheral notch 165b are less than about 0.10 mm, deformation or cracks may occur in the vent 165 in the cap plate 160. In addition, when the first thickness Ta of the central notch 165a and the second thickness Tb of the inner peripheral notch 165b exceed about 0.35 mm, the central notch 165a and the inner peripheral notch 165b may not fracture even when exposed to relatively high pressure and, thus, may not operate as the vent 165.

For example, FIG. 7 shows experimental results of fracture pressure according to a thickness of the vent in the cylindrical secondary battery shown in FIGS. 1 and 2. As shown in FIG. 7, when the central notch 165a and the inner peripheral notch 165b have a thickness of 0.15 mm, the vent 165 may fracture when the internal pressure in the case 110 is 12 kgf/cm². In addition, when the central notch 165a and the inner peripheral notch 165b have a thickness of 0.25 mm, the vent 165 may fracture when the internal pressure of the case 110 is 18 kgf/cm². In addition, when the thickness of the central notch 165a and the inner peripheral notch 165b exceeds 0.4 mm, the vent 165 does not fracture even when the internal pressure of the case 110 reaches 30 kgf/cm². In addition, a thickness from the upper surface to the lower surface of the central region 161 of the cap plate 160 may be in a range of about 0.7 mm to about 1.2 mm.

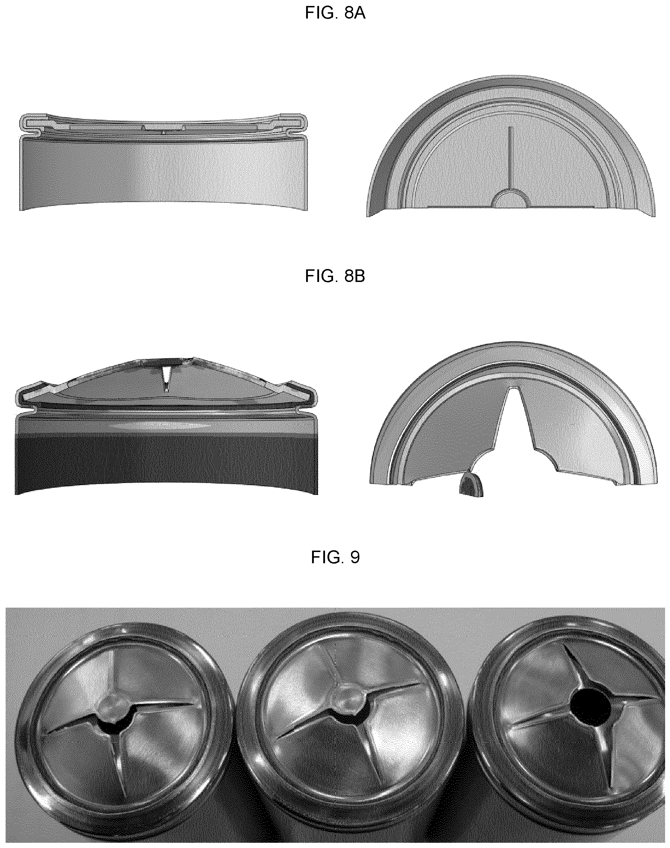

Also, FIGS. 8A and 8B are cross-sectional views and plan views, respectively, of the cap plate before and after the central notch and the inner peripheral notch of the cylindrical secondary battery shown in FIGS. 1 and 2 fracture. As shown in FIGS. 8A and 8B, when internal pressure of the case 110 increases, the central notch 165a fractures, and if the internal pressure is continuously generated (or continues to increase), the inner peripheral notch 165b fractures. Thus, gas and heat can be easily discharged through the cap plate 160 due to an increase in the fracture area.

FIG. 9 is a photograph of three cylindrical secondary batteries 100 showing results in which a vent 165 fractures due to an increase in internal pressure in a case 110. As shown in FIG. 9, because the vent 165 of the cylindrical secondary battery 100 includes a central notch 165a and an inner peripheral notch 165b, even when the vent 165 in a cap plate 160 fractures, internal components of the cylindrical secondary battery 100, such as a second current collector plate 140 inside the case 110, can be prevented from leaking out.

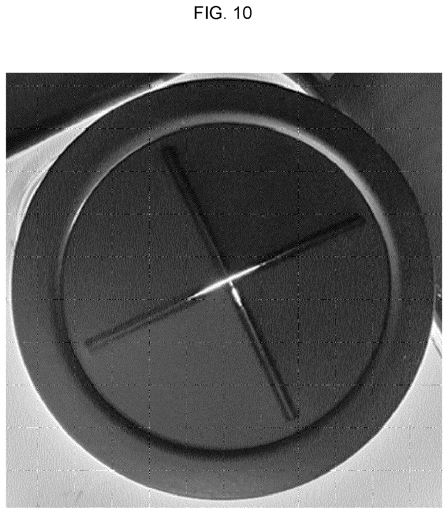

Additionally, referring to FIG. 10, as a comparative example, a result of fracture of a vent of a cap plate that does not have a central notch is shown. As shown in FIG. 10, when the internal pressure in a case increases, the notch fracture, but due to its small fracture area, internal gas and hot air may not be easily discharged through the cap plate.

Because a vent 165, according to an embodiment of the present disclosure, includes a central notch 165a and an inner peripheral notch 165b, when the internal pressure in a case 110 increases, an opening region (or fractured region) increases, thereby facilitating gas discharge. At the same time, the inner peripheral notch 165b fractures in a line shape, thereby preventing components, such as a second current collector plate 140, from leaking out (e.g., from passing through the cap plate 160).

Also, the central notch 165a may have an inner diameter of about 2 mm to about 9 mm. When the inner diameter of the central notch 165a exceeds about 9 mm, the second current collector plate 140 accommodated inside the case 110 may deviate to the outside due to internal pressure. And when the inner diameter of the central notch 165a is less than about 2 mm, internal gas may not be easily discharged and it may be difficult process (or form) the central notch due to a decrease in fracture area.

In a cylindrical secondary battery 100 according to an embodiment of the present disclosure, a vent 165 includes a central notch 165a having a ring shape and a plurality of inner peripheral notches 165b having a line shape extending outwardly from the central notch 165a. Thus, when the vent 165 fractures, gas can be easily discharged, and at the same time, internal components can be prevented from leaking out. In addition, because cylindrical secondary batteries 100 each have both a negative electrode and a positive electrode (e.g., negative and positive terminals) at a lower surface thereof, the plurality of cylindrical secondary batteries 100 need only be connected (e.g., electrically connected) together at the lower surfaces thereof when electrically connected through a bus bar. Thus, a bus bar connection structure can be simplified.

In a cylindrical secondary battery according to various embodiment of the present disclosure, because a vent provided in a cap plate has a central notch having a ring shape and a plurality of inner peripheral notches having a line shape extending outwardly from the central notch, gas may be easily discharged when the vent fractures while internal components are prevented from leaking outside.

In addition, because cylindrical secondary batteries according to various embodiments of the present disclosure each have both a negative electrode and a positive electrode (e.g., a negative terminal and a positive terminal) at a lower surface thereof, the plurality of cylindrical secondary batteries need only be connected at the lower surfaces thereof when electrically connected through a bus bar. Thus, a bus bar connection structure can be simplified.

The foregoing embodiments are only some embodiments for providing the cylindrical secondary battery of the present disclosure, which is not limited to these embodiments. It will be understood by a person skilled in the art that various changes in form and details may be made therein without departing from the scope of the present disclosure as defined by the following claims and their equivalents.

## Claims

1. A cylindrical secondary battery comprising:
an electrode assembly comprising a first electrode plate, a separator, and a second electrode plate;
a case accommodating the electrode assembly and electrically connected to the second electrode plate;
a terminal passing through a lower surface of the case and electrically connected to the first electrode plate; and
a cap plate sealing an upper end portion of the case and having a vent, the vent being a thinner portion of the cap plate than other regions thereof,
wherein the vent has:
a central notch having a ring shape and being at a central portion of the cap plate; and
an inner peripheral notch having a line shape extending from the central notch toward an edge of the cap plate.

2. The cylindrical secondary battery of claim 1, wherein a first thickness is a thickness of the central notch, and a second thickness is a thickness of the inner peripheral notch, and
wherein the first thickness is less than or equal to the second thickness.

3. The cylindrical secondary battery of claim 2, wherein the thickness of the central notch and the thickness of the inner peripheral notch are in a range of 0.1 mm to 0.35 mm.

4. The cylindrical secondary battery of any one of claims 1 to 3, further comprising:
a first current collector plate having a circular plate shape corresponding to a lower surface of the electrode assembly and contacting and electrically connected to the first electrode plate exposed at the lower surface of the electrode assembly; and
a second current collector plate having a circular plate shape corresponding to an upper surface of the electrode assembly and contacting and electrically connected to the second electrode plate exposed at the upper surface of the electrode assembly.

5. The cylindrical secondary battery of claim 4, wherein the cap plate is a circular metal plate and has a central region over the second current collector plate and an edge region coupled to the case and protruding upwardly above the central region thereof, and
wherein the vent is in the central region.

6. The cylindrical secondary battery of claim 5, wherein the case has:
a beading part recessed into the case below the cap plate; and
a crimping part formed by the upper end portion of the case being bent inwardly to fix the edge region of the cap plate.

7. The cylindrical secondary battery of any one of claims 1 to 6, wherein the inner peripheral notch comprises two to twelve inner peripheral notches that are spaced apart from each other at equal intervals around the central notch.

8. The cylindrical secondary battery of claim 7, wherein the inner peripheral notches are symmetrical to each other in a plan view with respect to the central notch.

9. The cylindrical secondary battery of any one of claims 1 to 8, further comprising:
a first gasket between the terminal and the case; and
a second gasket between the cap plate and the case,
wherein the cap plate is electrically insulated from the first electrode plate and the second electrode plate.

10. The cylindrical secondary battery of any one of claims 1 to 9, wherein the central notch has an inner diameter of 2 mm to 9 mm.

11. The cylindrical secondary battery of any one of claims 1 to 10, wherein a width of an upper surface of the central notch and a width of an upper surface of the inner peripheral notch is greater than a width of a lower surface thereof.

12. The cylindrical secondary battery of any one of claims 1 to 11, wherein the central notch and the inner peripheral notch have a two-stage or three-stage stepped portion shape.
